# EUROPEAN PATENT SPECIFICATION

(11) **EP 3 130 751 B1**
(45) Date of publication and mention of the grant of the patent: **04.08.2021**
(21) Application number: 16174459.4
(22) Date of filing: 14.06.2016
(51) Int. Cl.: F01D 5/08

(54) **APPARATUS AND METHOD FOR COOLING THE ROTOR OF A GAS TURBINE**
VORRICHTUNG UND VERFAHREN ZUR KÜHLUNG EINES GASTURBINENROTORS
DISPOSITIF ET PROCÉDÉ DE REFROIDISSEMENT D'UN ROTOR D'UNE TURBINE À GAZ

(30) Priority: 14.08.2015 US 201514826831
(43) Date of publication of application: 15.02.2017
(73) Proprietor: Raytheon Technologies Corporation, Farmington, CT 06032 (US)
(72) Inventor: GRIFFIN, David Richard, Tolland, CT Connecticut 06084 (US); WILSON, Ross, South Glastonbury, CT Connecticut 06073 (US); MOTT, Zachary, Glastonbury, CT Connecticut 06033 (US); MECKLENBURG, Dwayne K., Stafford Springs, CT Connecticut 06076 (US); LASTRINA, Michael, Manchester, CT Connecticut 06042 (US)
(74) Representative: Dehns

(56) References cited:
- EP-A2- 1 975 371
- US-A1- 2012 060 507
- None

## Description

### BACKGROUND

The invention relates to a rotor assembly for a gas turbine engine, a gas turbine engine and a method of thermally conditioning a rotor disc of a gas turbine engine. Gas turbines hot section components, in particular turbine vanes and blades in the turbine section of the gas turbine are configured for use within particular temperature ranges. Such components often rely on cooling airflow to maintain turbine components within this particular temperature range. For example, stationary turbine vanes often have internal passages for cooling airflow to flow through, and additionally may have openings in an outer surface of the vane for cooling airflow to exit the interior of the vane structure and form a cooling film of air over the outer surface to provide the necessary thermal conditioning. EP 1975371 discloses a rotor assembly for a gas turbine engine comprising a rotor disc having an axially extending rotor disc arm, a plurality of rotor blades extending radially outwardly from the rotor disc and a cover plate disposed at an axial face of the rotor disc and at least partially retained at a rotor disc arm, the rotor disc and cover plate defining a rotor cavity, a plurality of airflow openings extending into the cavity to allow a flow of air into the rotor cavity to thermally condition the rotor disc and the cover plate at the rotor cavity. Other components of the turbine often also require such thermal conditioning to reduce thermal gradients that would otherwise be present in the structure and which are generally undesirable. Thus ways to increase thermal conditioning capability in the turbine are desired.

### SUMMARY

According to a first aspect of the invention, there is provided a rotor assembly for a gas turbine engine, comprising: a rotor disc having an axially extending rotor disc arm; a plurality of rotor blades extending radially outwardly from the rotor disc; and a cover plate disposed at an axial face of the rotor disc and at least partially retained at a rotor disc arm, the rotor disc and cover plate defining a rim cavity, a plurality of airflow openings extending into the cavity to allow a flow of air into the rim cavity to thermally condition the rotor disc and the cover plate at the rim cavity; wherein the plurality of airflow openings extend through the rotor disc arm; and further comprising an outer arm flange disposed at the rotor arm to retain the cover plate at the rotor disc arm.

Additionally the rotor cavity is positioned radially outboard of the rotor disc arm.

Additionally the cover plate is positioned radially outboard of the rotor disc arm.

Additionally the plurality of rotor arm openings are one or more of circular, oval or elliptically-shaped.

Additionally the plurality of rotor arm openings are equally spaced around a circumference of the rotor disc arm.

Additionally the rotor disc arm extends in an axially upstream direction from the rotor disc.

Additionally the rotor is a turbine rotor.

Further a gas turbine engine includes a combustor and a rotor assembly according to the first aspect of the invention positioned in fluid communication with the combustor.

Additionally the plurality of airflow openings extend through the rotor disc arm.

Additionally an outer arm flange is positioned at the rotor arm to retain the cover plate at the rotor disc arm.

Additionally the rotor cavity is positioned radially outboard of the rotor disc arm.

Additionally the cover plate is positioned radially outboard of the rotor disc arm.

Additionally the plurality of rotor arm openings are one or more of circular, oval or elliptically-shaped.

Additionally the plurality of rotor arm openings are equally spaced around a circumference of the rotor disc arm.

Additionally the rotor disc arm extends in an axially upstream direction from the rotor disc.

Additionally the rotor is a turbine rotor.

In a second aspect, there is provided a method of thermally conditioning a rotor disc of a gas turbine engine, comprising: positioning a cover plate at a rotor disc such that a rim cavity is defined between the cover plate and the rotor disc; directing an airflow into the cavity through a plurality of airflow openings that extend through the rotor disc arm; and thermally conditioning the rotor disc and/or the cover plate at the rim cavity via a thermal energy exchange between the airflow and the rotor disc and/or the cover plate; wherein the rotor disc further comprises an outer arm flange disposed at the rotor arm to retain the cover plate at the rotor disc arm.

Additionally the plurality of airflow openings are positioned at an axially-extending rotor disc arm of the rotor disc.

### BRIEF DESCRIPTION OF THE DRAWINGS

The subject matter which is regarded as the present disclosure is particularly pointed out and distinctly claimed in the claims at the conclusion of the specification. The foregoing and other features, and advantages of the present disclosure are apparent from the following detailed description taken in conjunction with the accompanying drawings in which:
FIG. 1 is a schematic illustration of a gas turbine engine;
FIG. 2 is a partial cross-sectional view of an embodiment of a turbine disc structure; and
FIG. 3 is an axial end view of an embodiment of a turbine rotor.

### DETAILED DESCRIPTION

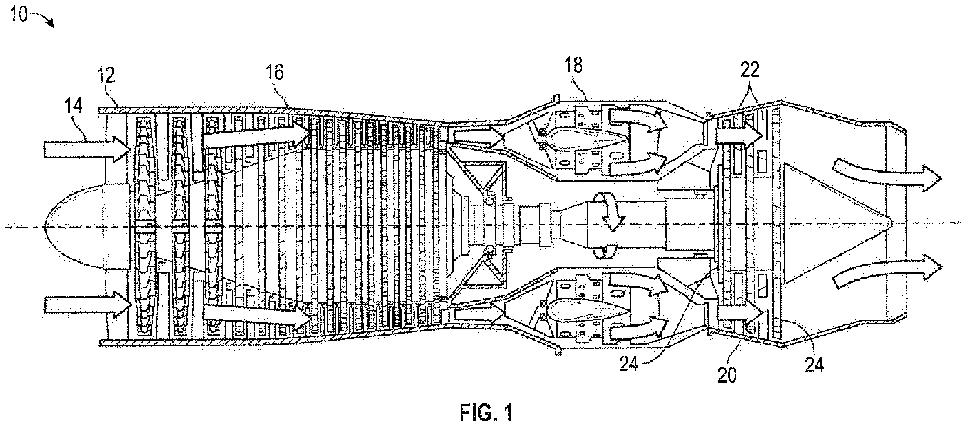

FIG. 1 is a schematic illustration of a gas turbine engine 10. The gas turbine engine generally has a fan 12 through which ambient air is propelled in the direction of arrow 14, a compressor 16 for pressurizing the air received from the fan 12 and a combustor 18 wherein the compressed air is mixed with fuel and ignited for generating combustion gases.

The gas turbine engine 10 further comprises a turbine section 20 for extracting energy from the combustion gases. Fuel is injected into the combustor 18 of the gas turbine engine 10 for mixing with the compressed air from the compressor 16 and ignition of the resultant mixture. The fan 12, compressor 16, combustor 18, and turbine 20 are typically all concentric about a common central longitudinal axis of the gas turbine engine 10.

The gas turbine engine 10 may further comprise a low pressure compressor located upstream of a high pressure compressor and a high pressure turbine located upstream of a low pressure turbine. For example, the compressor 16 may be a multi-stage compressor 16 that has a low-pressure compressor and a high-pressure compressor and the turbine 20 may be a multistage turbine 20 that has a high-pressure turbine and a low-pressure turbine. In one embodiment, the low-pressure compressor is connected to the low-pressure turbine and the high pressure compressor is connected to the high-pressure turbine.

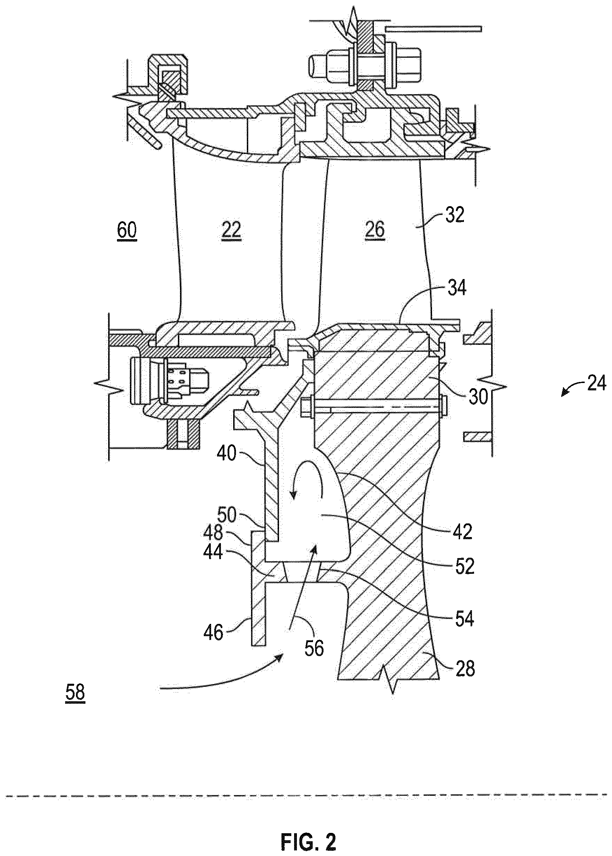

The turbine 20 includes one or more sets, or stages, of fixed turbine vanes 22 and turbine rotors 24, each turbine rotor 24 including a plurality of turbine blades 26. The turbine vanes 22 and the turbine blades 26 (shown in FIG. 2) utilize a cooling airflow to maintain the turbine components within a desired temperature range. In some embodiments, the cooling airflow may flow internal through the turbine components to cool the components internally, while in other embodiments, the cooling airflow is utilized to form a cooling film on exterior surfaces of the components.

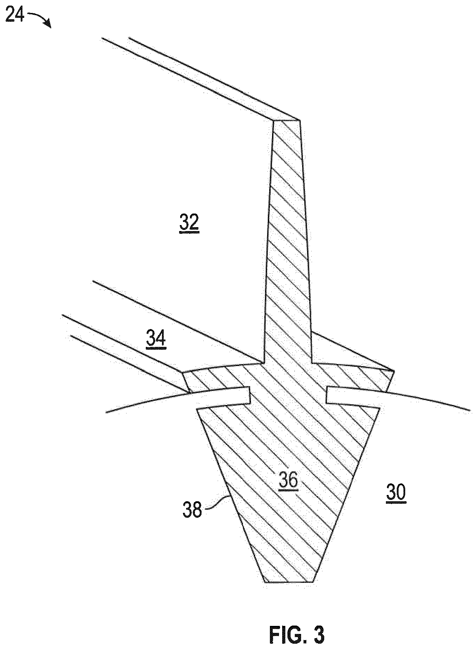

FIG. 2 illustrates a turbine rotor 24 structure in more detail. While the description relates to a turbine rotor 24, it is to be appreciated that the present disclosure may be readily applied to other components of the gas turbine engine 10, for example, a compressor rotor. The turbine rotor 24 includes a turbine disc 28 having a disc rim 30 to which a plurality of radially-extending turbine blades 26 are mounted. Each turbine blade 26 includes an airfoil portion 32 extending from a blade platform 34. As shown in FIG. 3, a blade root 36 extends radially inboard of the blade platform 34 and is inserted into a complementary slot 38 or other opening in the disc rim 30 to mount the turbine blade 26 to the turbine disc 28. The turbine blade 26 may be anchored in place in the turbine disc 28 by bolts, rivets, or other mechanical fastening arrangements.

Referring again to FIG. 2, the turbine rotor 24 further includes a cover plate 40 located upstream of the disc rim 30 to cover an upstream annular face 42 of the disc rim 30, and the joint between the blade root 36 and slot 38 to prevent leakage of hot gaspath flow therethrough. The cover plate 40 may be a single piece extending circumferentially around the entire turbine rotor 24 or may be segmented into, for example, six, eight or ten circumferential segments. Radially inboard of the disc rim 30, the turbine disc 28 includes a disc arm 44 extending axially upstream of the turbine disc 28. The disc arm 44 includes an inner arm flange 46, which may be used to connect an upstream turbine rotor 24 to the present turbine rotor 24 via bolts or other fasteners extending through the inner arm flange 46.

The disc arm 44 further includes an outer arm flange 48 extending radially outwardly from the disc arm 44. The outer arm flange 48 retains a inboard end of the cover plate 40, in some embodiments via radial overlap between the outer arm flange 48 and the cover plate 40, with the cover plate inboard end 50 located axially downstream of and abutting the outer arm flange 48. The cover plate 40, the disc rim 30, the disc arm 44 and the outer arm flange 48 together enclose and define a rim cavity 52.

It is desired to provide an airflow into the cavity 52 to thermally condition, or cool, the adjacent components the cover plate 40, and the turbine disc 28 to enhance the service life of the components. To that end, one or more airflow openings 54 extend through the disc arm 44. In some embodiments, the airflow openings 54 are circular, but other cross-sectional shapes such as oval, elliptical or other shapes may be utilized. In some embodiments, a plurality of airflow openings 54 is distributed about a circumference of the disc arm 44. In some embodiments, the airflow openings 54 are equally spaced around the circumference.

The airflow openings 54 are sized and configured to allow an airflow 56 from a turbine interior 58, radially inboard of a hot gas path 60, into the cavity 52. The airflow 56 circulates through the cavity 52, exchanging thermal energy with the turbine disc 28 and cover plate 40, thus reducing a temperature of the cover plate 40 and the turbine disc 28.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present invention is not to be seen as limited by the foregoing description, but is only limited by the scope of the appended claims.

## Claims

1. A rotor assembly for a gas turbine engine, comprising:
a rotor disc (28) having an axially extending rotor disc arm (44);
a plurality of rotor blades (26) extending radially outwardly from the rotor disc; and
a cover plate (40) disposed at an axial face of the rotor disc and at least partially retained at a rotor disc arm, the rotor disc and cover plate defining a rim cavity (52), a plurality of airflow openings (54) extending into the cavity to allow a flow of air into the rim cavity to thermally condition the rotor disc and the cover plate at the rim cavity;
wherein the plurality of airflow openings extend through the rotor disc arm; and
further comprising an outer arm flange (48) disposed at the rotor disc arm (44) to retain the cover plate at the rotor disc arm.

2. The rotor assembly of any preceding claim, wherein the rim cavity is disposed radially outboard of the rotor disc arm.

3. The rotor assembly of any preceding claim, wherein the cover plate is disposed radially outboard of the rotor disc arm.

4. The rotor assembly of any preceding claim, wherein the plurality of airflow openings (54) are one or more of circular, oval or elliptically-shaped.

5. The rotor assembly of any preceding claim, wherein the plurality of airflow openings (54) are equally spaced around a circumference of the rotor disc arm.

6. The rotor assembly of any preceding claim, wherein the rotor disc arm extends in an axially upstream direction from the rotor disc.

7. The rotor assembly of any preceding claim, wherein the rotor disc is a rotor disc of a turbine rotor.

8. A gas turbine engine (10), comprising:
a combustor (18); and
a rotor disposed in fluid communication with the combustor, the rotor including:
the rotor assembly of any preceding claim.

9. The gas turbine engine of claim 8, wherein the rotor is a turbine rotor.

10. A method of thermally conditioning a rotor disc (28) of a gas turbine engine (10), comprising:
positioning a cover plate (40) at a rotor disc such that a rim cavity (52) is defined between the cover plate and the rotor disc;
directing an airflow into the rim cavity (52) through a plurality of airflow openings (54) that extend through a rotor disc arm (44) and
thermally conditioning the rotor disc and/or the cover plate at the rim cavity via a thermal energy exchange between the airflow and the rotor disc and/or the cover plate;
wherein the rotor disc further comprises an outer arm flange (48) disposed at the rotor disc arm to retain the cover plate at the rotor disc arm.

11. The method of claim 10, wherein the plurality of airflow openings are disposed at an axially-extending rotor disc arm (48) of the rotor disc.

## Patentansprüche

1. Rotoranordnung für ein Gasturbinentriebwerk, umfassend:
eine Rotorscheibe (28), die einen sich axial erstreckenden Rotorscheibenarm (44) aufweist;
eine Vielzahl von Rotorschaufeln (26), die sich von der Rotorscheibe aus radial nach außen erstrecken; und
eine Deckplatte (40), die an einer axialen Seite der Rotorscheibe angeordnet ist und mindestens teilweise an einem Rotorscheibenarm festgehalten wird, wobei die Rotorscheibe und die Deckplatte einen Kantenhohlraum (52) definieren, wobei sich eine Vielzahl von Luftstromöffnungen (54) in den Hohlraum erstrecken, um einen Luftstrom in den Kantenhohlraum einzulassen, um die Rotorscheibe und die Deckplatte an dem Kantenhohlraum thermisch zu konditionieren;
wobei sich die Vielzahl von Luftstromöffnungen durch den Rotorscheibenarm erstrecken; und
ferner einen äußeren Armflansch (48) umfassend, der an dem Rotorscheibenarm (44) angeordnet ist, um die Deckplatte an dem Rotorscheibenarm festzuhalten.

2. Rotoranordnung nach einem der vorstehenden Ansprüche, wobei der Kantenhohlraum radial außerhalb des Rotorscheibenarms angeordnet ist.

3. Rotoranordnung nach einem der vorstehenden Ansprüche, wobei die Deckplatte radial außerhalb des Rotorscheibenarms angeordnet ist.

4. Rotoranordnung nach einem der vorstehenden Ansprüche, wobei die Vielzahl von Luftstromöffnung (54) eines aus kreisförmig, oval oder elliptisch geformt sind.

5. Rotoranordnung nach einem der vorstehenden Ansprüche, wobei die Vielzahl von Luftstromöffnung (54) gleichmäßig um einen Umfang des Rotorscheibenarms beabstandet sind.

6. Rotoranordnung nach einem der vorstehenden Ansprüche, wobei sich der Rotorscheibenarm in einer axial stromaufwärtigen Richtung von der Rotorscheibe aus erstreckt.

7. Rotoranordnung nach einem der vorstehenden Ansprüche, wobei die Rotorscheibe eine Rotorscheibe eines Turbinenrotors ist.

8. Gasturbinentriebwerk (10), umfassend:
eine Brennkammer (18); und
einen Rotor, der in Fluidverbindung mit der Brennkammer angeordnet ist, wobei der Rotor Folgendes beinhaltet:
die Rotoranordnung nach einem der vorstehenden Ansprüche.

9. Gasturbinentriebwerk nach Anspruch 8, wobei der Rotor ein Turbinenrotor ist.

10. Verfahren zum thermischen Konditionieren einer Rotorscheibe (28) eines Gasturbinentriebwerks (10), Folgendes umfassend:
Anordnen einer Deckplatte (40) an einer Rotorscheibe, so dass ein Kantenhohlraum (52) zwischen der Deckplatte und der Rotorscheibe definiert wird;
Leiten eines Luftstroms in den Kantenhohlraum (52) durch eine Vielzahl von Luftstromöffnungen (54), die sich durch einen Rotorscheibenarm (44) erstrecken, und
thermisches Konditionieren der Rotorscheibe und/oder der Deckplatte an dem Kantenhohlraum über einen Wärmeenergieaustausch zwischen dem Luftstrom und der Rotorscheibe und/oder der Abdeckplatte;
wobei die Rotorscheibe ferner einen äußeren Armflansch (48) umfasst, der an der Rotorscheibe angeordnet ist, um die Deckplatte an dem Rotorscheibenarm festzuhalten.

11. Verfahren nach Anspruch 10, wobei die Vielzahl von Luftstromöffnungen an einem axial verlaufenden Rotorscheibenarm (48) der Rotorscheibe angeordnet sind.

## Revendications

1. Ensemble rotor pour un moteur à turbine à gaz, comprenant :
un disque de rotor (28) ayant un bras de disque de rotor (44) s'étendant axialement ;
une pluralité de pales de rotor (26) s'étendant radialement vers l'extérieur à partir du disque de rotor ; et
une plaque de recouvrement (40) disposée sur une face axiale du disque de rotor et au moins partiellement retenue au niveau d'un bras de disque de rotor, le disque de rotor et la plaque de recouvrement définissant une cavité de bord (52), une pluralité d'ouvertures d'écoulement d'air (54) s'étendant dans la cavité pour permettre un écoulement d'air dans la cavité de bord pour conditionner thermiquement le disque de rotor et la plaque de recouvrement au niveau de la cavité de bord ;
dans lequel la pluralité d'ouvertures d'écoulement d'air traversent le bras de disque de rotor ; et
comprenant en outre une bride de bras externe (48) disposée au niveau du bras de disque de rotor (44) pour retenir la plaque de recouvrement au niveau du bras de disque de rotor.

2. Ensemble rotor selon une quelconque revendication précédente, dans lequel la cavité de bord est disposée radialement à l'extérieur du bras de disque de rotor.

3. Ensemble rotor selon une quelconque revendication précédente, dans lequel la plaque de recouvrement est disposée radialement à l'extérieur du bras de disque de rotor.

4. Ensemble rotor selon une quelconque revendication précédente, dans lequel la pluralité d'ouvertures d'écoulement d'air (54) prennent une ou plusieurs formes parmi une forme circulaire, ovale ou elliptique.

5. Ensemble rotor selon une quelconque revendication précédente, dans lequel la pluralité d'ouvertures d'écoulement d'air (54) sont situées à égale distance autour d'une circonférence du bras de disque de rotor.

6. Ensemble rotor selon une quelconque revendication précédente, dans lequel le bras de disque de rotor s'étend dans une direction axialement amont à partir du disque de rotor.

7. Ensemble rotor selon une quelconque revendication précédente, dans lequel le disque de rotor est un disque de rotor d'un rotor de turbine.

8. Moteur à turbine à gaz (10), comprenant :
une chambre de combustion (18) ; et
un rotor disposé en communication fluidique avec la chambre de combustion, le rotor comportant :
l'ensemble rotor selon une quelconque revendication précédente.

9. Moteur à turbine à gaz selon la revendication 8, dans lequel le rotor est un rotor de turbine.

10. Procédé de conditionnement thermique d'un disque de rotor (28) d'un moteur à turbine à gaz (10), comprenant :
le positionnement d'une plaque de recouvrement (40) au niveau d'un disque de rotor de sorte qu'une cavité de bord (52) est définie entre la plaque de recouvrement et le disque de rotor ;
l'orientation d'un écoulement d'air dans la cavité de bord (52) à travers une pluralité d'ouvertures d'écoulement d'air (54) qui traversent un bras de disque de rotor (44) et
le conditionnement thermique du disque de rotor et/ou de la plaque de recouvrement au niveau de la cavité de bord par l'intermédiaire d'un échange d'énergie thermique entre l'écoulement d'air et le disque de rotor et/ou la plaque de recouvrement ;
dans lequel le disque de rotor comprend en outre une bride de bras externe (48) disposée au niveau du bras de disque de rotor pour retenir la plaque de recouvrement au niveau du bras de disque de rotor.

11. Procédé selon la revendication 10, dans lequel la pluralité d'ouvertures d'écoulement d'air sont disposées au niveau d'un bras de disque de rotor s'étendant axialement (48) du disque de rotor.
